# EUROPEAN PATENT APPLICATION

(11) **EP 4 212 316 A1**
(43) Date of publication of application: **19.07.2023**
(21) Application number: 22212863.9
(22) Date of filing: 12.12.2022
(51) Int. Cl.: B29C 65/74, B29C 65/78, B29C 65/08, B29C 65/18, B65B 51/30, B29C 65/30

(54) **A TRANSVERSE WELDING AND CUTTING ASSEMBLY FOR A FLOW-PACK PACKAGING MACHINE**

(30) Priority: 17.01.2022 IT 202200000617
(71) Applicant: Cavanna S.p.A., 28077 Prato Sesia (NO) (IT)
(72) Inventor: IOPPA, Mr. Lorenzo, I-28077 Prato Sesia (Novara) (IT); BROLLI, Mr. Elio, I-28077 Prato Sesia (Novara) (IT); PISTOLESI, Mr. Alessandro, I-28077 Prato Sesia (Novara) (IT)
(74) Representative: Notaro, Giancarlo

(57) **Abstract**

A transverse welding and cutting assembly (1) for a flow-pack packaging machine, comprising:
- a transverse welding unit (2) comprising a translating base (16) movable with respect to a stationary support structure (14) along a first straight direction (A), a first and a second welding element (3,4) carried by the translating base (16) and movable with respect to each other, along a second straight direction (B) between an open position and a closed position in phase with the movement of the translating base (16),
- a transverse cutting unit (5) separated and arranged downstream with respect to said welding unit (2), wherein said transverse cutting unit (5) is of the stationary rotary type.

## Description

### TEXT OF THE DESCRIPTION

### Field of the invention

The present invention relates in general to the packaging sector and specifically concerns flow-pack packaging.

More precisely, the invention relates to a transverse welding and cutting assembly for a flow-pack packaging machine.

### Description of the prior art

Flow-pack packaging is one of the most widely used systems for packaging of a great variety of products, in particular, food products, such as, for example, biscuits, snacks, bars, etc.

In flow-pack packaging systems, a continuous packaging film, typically of plastic material, is unwound from a reel and is folded into the shape of a tubular element that surrounds the products to be packaged and advances in a machine direction together with the flow of products to be packaged. The tubular element of packaging material is closed by means of a continuous longitudinal weld, which joins the opposite longitudinal edges of the packaging film, and by means of transverse welds spaced apart in the machine direction, which seal the tubular element at opposite sides with respect to the products.

A horizontal flow-pack packaging machine typically comprises:
- a horizontal conveyor configured to advance a flow of products along a longitudinal direction,
- an unwinding unit configured to feed a continuous packaging film,

- a stationary forming device configured to fold the packaging film in the form of a tubular element that surrounds the products to be packaged,
- a longitudinal welding assembly located downstream of the forming device and configured to weld together opposite longitudinal edges of the packaging film, and
- a transverse welding assembly configured for transversally welding the tubular element formed by the film of packaging material, and
- a cutting element to separate the products.

The transverse welding assembly may comprise two welding elements that rotate around two axes parallel to each other. This solution has the drawback of a limited contact time between the welding elements and the film of packaging material.

In cases where to carry out the transverse welding it is necessary to keep the welding elements in contact with the packaging film for a longer time than is possible with the rotating welding assemblies, a transverse welding assembly called box-motion is used, comprising a translating base, which is movable alternately along the machine direction between a rearward position and an advanced position and vice versa. The translating base carries two welding elements that are movable relative to each other between an open position and a closed position, in phase with the movement of the translating base.

In a box-motion transverse welding assembly, the reciprocating movement of the translating base is generally obtained starting from a rotary electric motor, connected to a transmission mechanism, for example, a connecting rod and crank, which transforms the rotary motion of the electric motor into an alternative straight movement of the translating base.

To carry out the transverse cut of the continuous packaging film in the welded region, it is possible to integrate a cutting unit to the welding assembly of the box-motion type, so that one or more cutting elements move solidly with the welding elements, creating - in a single operation - the welding and cutting of the continuous film.

However, this solution has the disadvantage of being subject to considerable wear due to the additional masses on the translating unit.

### Object and summary of the invention

The present invention aims to provide a transverse welding and cutting assembly for a flow-pack packaging machine that overcomes the problems of the prior art.

According to the present invention, this object is achieved by a transverse welding and cutting assembly having the characteristics forming the subject of claim 1.

Preferred embodiments of the invention form the subject of the dependent claims.

The claims form an integral part of the disclosure provided here in relation to the invention.

### Brief description of the drawings

The present invention will now be described in detail with reference to the attached drawings, given purely by way of non-limiting example, wherein:
- Figure 1 is a perspective view of the transverse welding and cutting assembly according to the present invention, and
- Figures 2-6 are side views of the assembly of the previous Figure, wherein different operating steps are shown.

### Detailed description

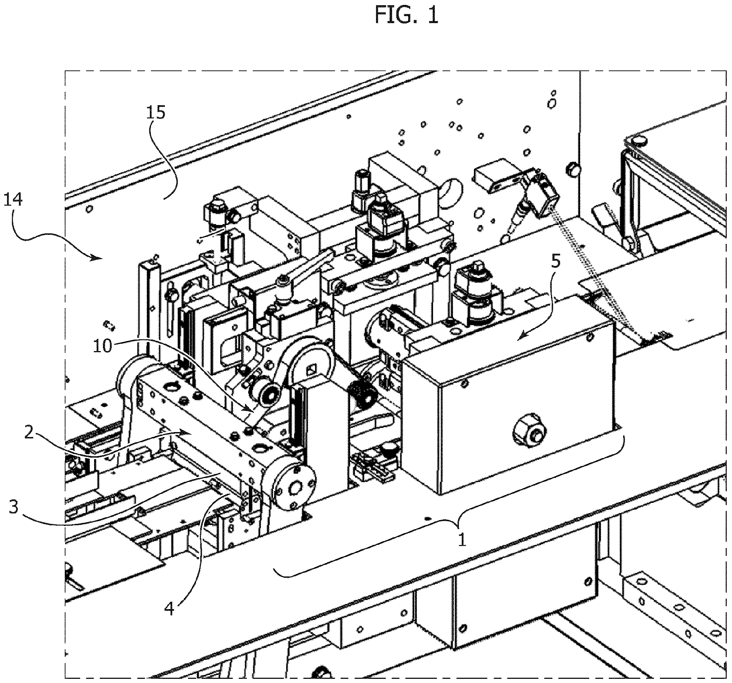

With reference to Figures 1-6, numeral 1 indicates a transverse welding and cutting assembly for a horizontal flow-pack packaging machine.

In a packaging machine intended to form packages of the type currently referred to as "flow-pack", the packages are formed starting from a continuous flow of products fed to an inlet end of the machine and from an aluminum sheet or sheet of transparent material, which is continuously unwound from above.

According to widely known criteria, starting from the sheet, a continuous tubular casing T is formed inside of which the products are fed with a constant pitch.

The continuous tubular casing T is made to advance towards a closing station whose function is essentially that of flattening the tubular casing in the spaces between two consecutive products, forming welding areas S in these spaces intended to seal off the individual products P.

The casing is then subjected to a cutting operation at the welded areas S with the consequent separation of the packages C, each containing a product.

According to the invention, the transverse welding and cutting assembly 1 comprises a transverse welding unit 2 of the "box-motion" type.

In one or more embodiments, the transverse welding unit 2 comprises a stationary support structure 14 including a vertical plate 15 and feet 16 resting on the ground. The transverse welding unit 2 further comprises a translating base 16 movable with respect to the support structure 14 along a first horizontal straight direction A.

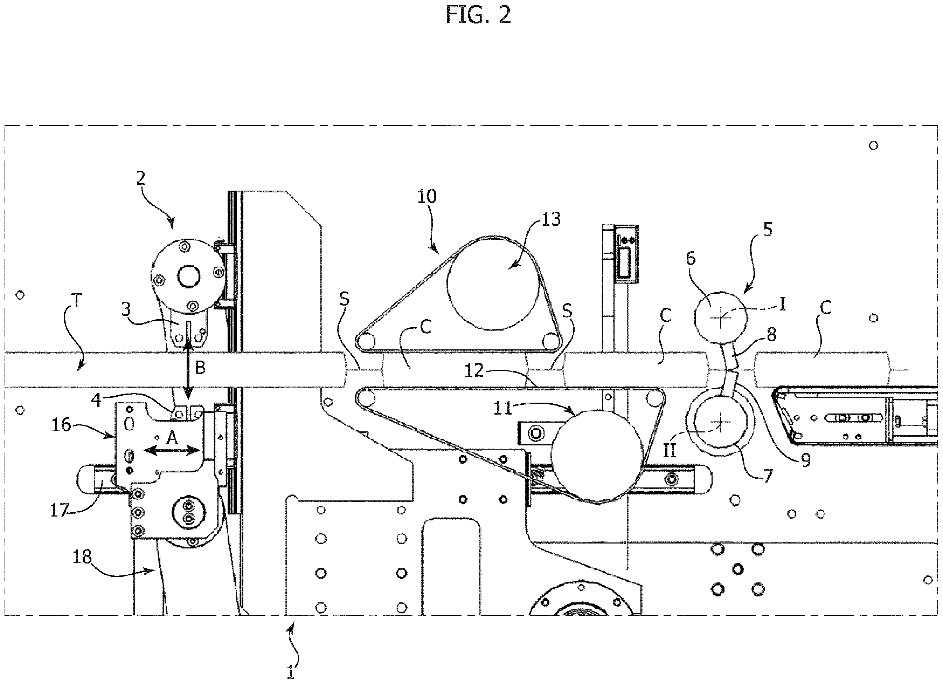

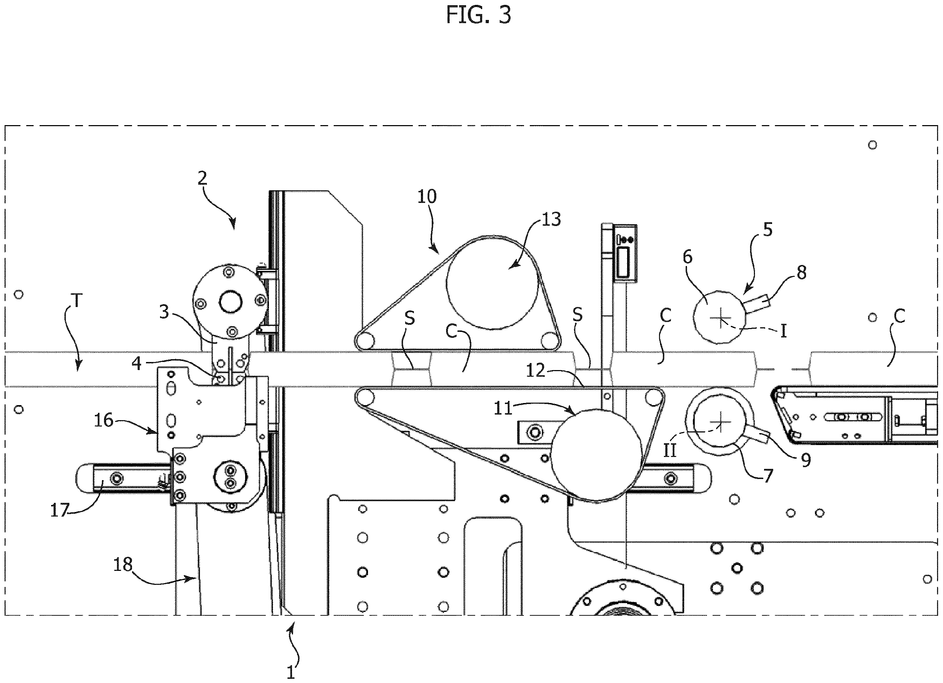

The translating base 16 is movable alternately along the direction A between a rearward position and an advanced position and vice versa (illustrated, respectively, in Figures 2, 3). The translating base 16 may be provided with sliders, which engage two horizontal guides 17.

The translating base 16 carries a first welding element 3 and a second welding element 4 movable relative to each other according to a second straight direction B, perpendicular to the first straight direction A, between an open position and a closed position, in phase with the movement of the translating base 16 in the direction A. Both the welding elements 3,4 may be configured movable with respect to the translating base 16 to vary their reciprocal distance between a closed position in which the welding elements 3,4 are in contact with each other, and an open position in which the welding elements 3,4 are detached from each other. The movement of the welding elements 3,4 is controlled by an actuator unit carried by the translating base 16, which can be produced according to the prior art. It should be noted that the transverse welding unit 2 comprises a transmission mechanism 18 configured to guide the movement of the welding elements 3,4 in the straight direction B. In one or more embodiments, the welding elements 3,4 may be preliminarily adjusted in the vertical direction to adapt the transverse welding unit 2 to the thickness of the products to be packaged.

The operation of the forming of the packages is continuous, as the tubular casing T may undergo variations in speed, but it never stops during operation to carry out the welding operations. Consequently, the welding elements 3,4 must follow the moving products, in particular during welding, the closed welding elements must translate the same speed as the casing T.

The weld S is formed by pressing the tubular casing T in the region comprised between two successive articles and - at the same time - heating the casing so as to produce thermowelding of the two branches or edges of the casing pressed against each other. In one or more embodiments, the elements 3,4 are thermowelding elements. According to a further embodiment, the welding elements 3,4 are configured to carry out an ultrasonic welding.

According to the invention, the transverse welding and cutting assembly 1 comprises a transverse cutting unit 5 separated and arranged downstream from the welding unit 2, with reference to the machine direction. The cutting operations lead to the formation of the individual packages C, each containing a product.

The cutting unit 5 is of the stationary rotary type and comprises a pair of active rotary elements 6,7, configured to rotate around a respective axis I, II, each carrying a cutting element 8,9 to cut the casing T passing between the two rotary active elements 6, 7.

As illustrated in Figures 2-6, the rotary elements 6,7 - substantially identical to each other - are respectively positioned above and below the tubular casing T.

In one or more embodiments, each rotary active element 6,7 essentially consists of a shaft driven into rotation by motor means (not shown). As previously indicated, the rotary active elements 6,7 carry cutting elements 8,9 intended to cooperate with each other to cut the welding region S between successive packages C formed in the upstream welding unit 2, so as to separate the casing into single packages.

Another characteristic of the invention is given in that the cutting unit 5 located downstream of the welding unit 2 is mounted on the machine structure in a stationary way.

In one or more embodiments, the transverse cutting unit 5 is of the counter-rotating jaw type. In a known way, the shafts are connected to each other by a gear, which controls their rotation in opposite directions. Thus, an orbital movement in opposite directions of the active rotary elements 6,7 is determined, which brings the cutting elements 8,9 each time into positions of reciprocal adjacency to produce cutting of the casing T, with the separation of the packages C. It is for this object that the active elements 6,7 are provided with cutting edges 8,9. The cutting edges, coming into contact with each other, cause the cutting of the casing T, previously softened by the effect of the welding.

Between the welding unit 2 and the cutting unit 5 it is advantageous to interpose a stabilization unit 10 for the movement of the packages whose end edges have already been welded but not yet cut.

In the illustrated embodiment example, the stabilization assembly 10 comprises a lower conveyor element 11 with a continuous motorized loop, having an active branch 12 aligned with the sliding plane of the packages, and an upper conveyor element 13 also motorized.

The function of the conveyors 11,13 is to positively guide the products inserted in the packages already welded between the welding unit 2 and the cutting unit 5, in order to ensure correct guidance of the advancement of the articles between the two units 2,5, avoiding the risk of clamping or crushing phenomena of the products.

In the solution described, the assembly 1 carries out the transverse welding and cutting operations in succession, maintaining a safe control over the packages C for the entire extension of the transit trajectory of the packages C through the assembly 1.

As previously indicated, the welding and cutting units 2,5 are arranged in cascade with each other with the object, for the upstream welding unit 2, of closing the tubular casing, forming sealing (welding) areas S, which separate subsequent articles into packages and, for the downstream cutting unit 5, to produce cutting of the casing T, so as to separate the subsequent packages C thus formed.

In these conditions, the operation of the two units 2,5 must be adequately synchronized (operation that can be easily carried out with known means, by programming an electronic control unit E of the assembly 1), in order to carry out the welding and cutting of packaging products in a single transverse assembly 1.

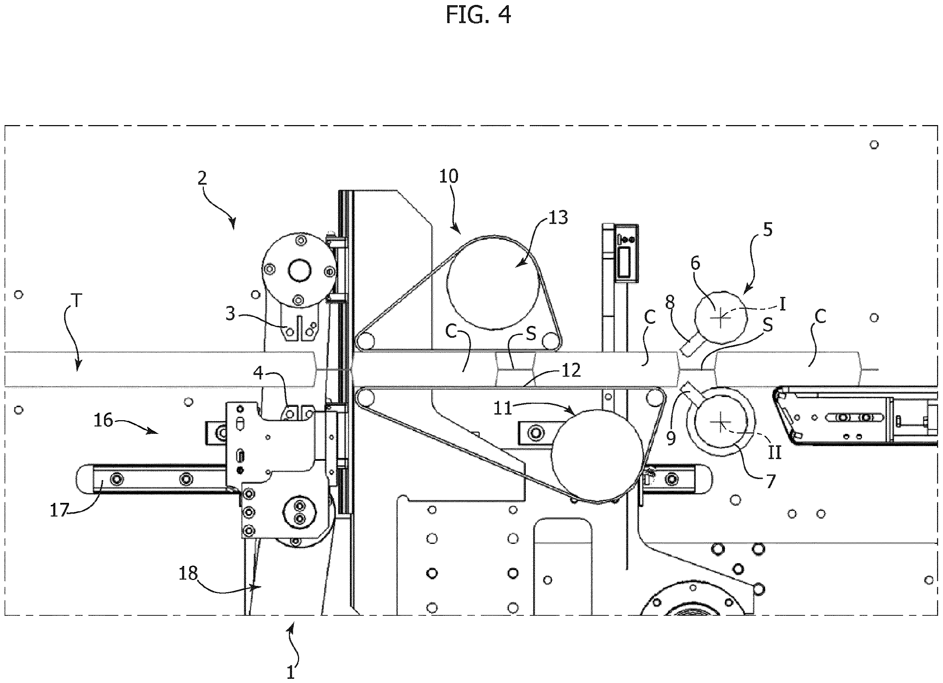

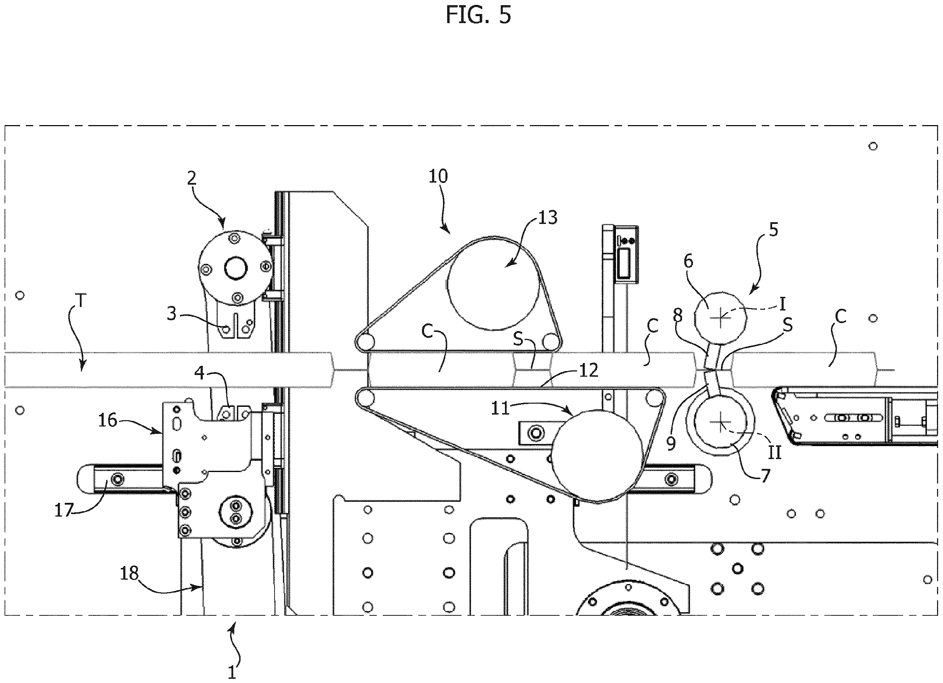

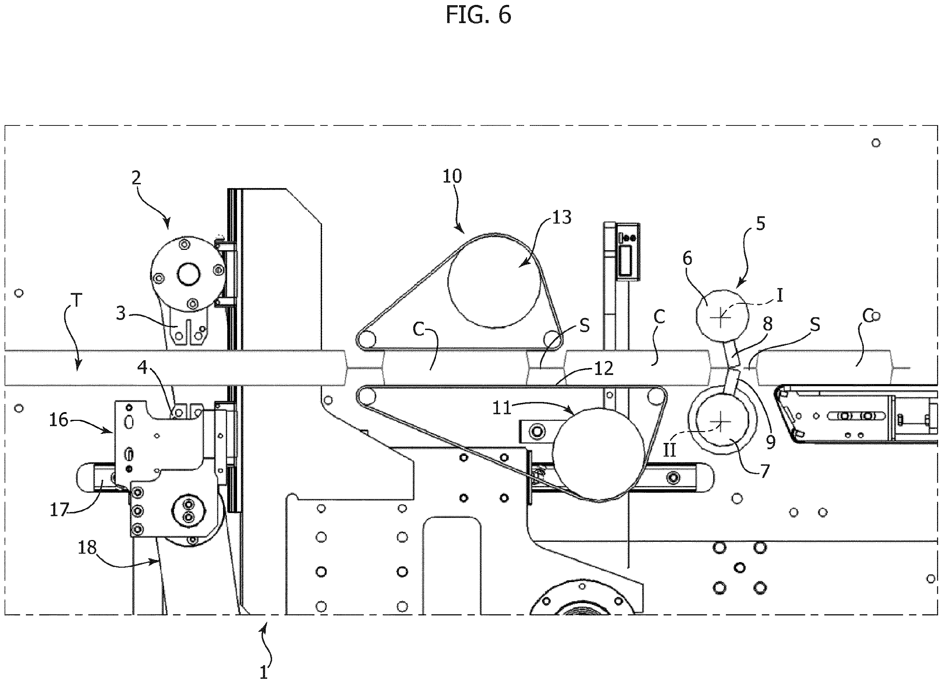

Figures 2-6 illustrate an operation sequence of the assembly 1. The tubular casing T is guided along the direction A (in the drawings from left to right) through the welding and cutting units 2,5. Figure 2 illustrates the cutting unit 5 with the cutting elements 8,9 which are completing the cutting of a package C, while the welding elements 3,4 are in the open position. Figure 3 illustrates the welding elements 3,4 in the closed position to carry out a welding, after sliding along the first direction A following the tubular casing T. Figure 4 illustrates the welding elements 3,4 in the open position, after having carried out a welding, while the cutting elements 8,9 are about to come into contact with the casing T, to carry out the cutting. Figure 5 illustrates the cutting elements 8,9 as they begin cutting the previously welded area S; the welding elements 3,4 are in the open position while they move along the direction A in the opposite direction with respect to the sliding of the casing T, to reach the initial position of tracking of the casing T to carry out a new welding. Figure 6 illustrates the cutting elements 8,9 in the position at the end of the cutting, and the welding elements 3,4 in the open position and withdrawn to start a new weld by following the tubular casing T.

Of course, without prejudice to the principle of the invention, the details of construction and the embodiments may vary widely with respect to those described and illustrated purely by way of example, without departing from the scope of the present invention.

## Claims

1. A transverse welding and cutting assembly (1) for a flow-pack packaging machine, comprising:
- a transverse welding unit (2) comprising a stationary support structure (14), a translating base (16) movable with respect to the stationary support structure (14) along a first straight direction (A), between a rearward position and an advanced position and vice versa, a first and a second welding element (3,4) carried by the translating base (16) and movable with respect to each other, by means of a transmission mechanism (18), along a second straight direction (B) between an open position and a closed position in phase with the movement of the translating base (16),
- a transverse cutting unit (5) separated and arranged downstream with respect to said welding unit (2), wherein said transverse cutting unit (5) is of the stationary rotary type.

2. An assembly (1) according to claim 1, wherein said transverse cutting unit (5) comprises a pair of rotary active elements (6,7) configured to rotate around a respective axis (I, II), each rotary active element (6,7) carrying a cutting element (8,9) to perform a cutting operation at a welded area (S) of the continuous tubular casing (T), which advances along the welding unit (2) and the cutting unit (5).

3. An assembly (1) according to claim 2, wherein the rotary elements (6,7) are positioned, respectively, above and below the tubular casing (T).

4. An assembly (1) according to claim 2, wherein said cutting elements (8,9) are configured to cooperate together for cutting the welding region (S) formed by means of the upstream welding unit (2), so as to separate the casing (T) into single packages (C).

5. An assembly (1) according to claim 2, wherein said rotary elements (6,7) are configured for providing a circular movement in opposite directions, which bring the cutting elements (8,9) to positions of reciprocal adjacency for carrying out cutting of the casing (T).

6. An assembly (1) according to claim 1, wherein a package stabilization unit (10) is interposed between said welding unit (2) and said cutting unit (5) comprising:
- a lower conveyor element (11) of continuous motorized loop type, having an active branch (12) for conveying the packages (C) substantially aligned with the direction of the transit movement of the packages (C), and
- a motorized upper conveyor element (13) having an active branch in contact with the transiting packages (C).

7. An assembly (1) according to claim 6, comprising an electronic control unit (E) configured to synchronize the operation of the welding and cutting units (2,5), so as to carry out welding and cutting of the packages (C) with a single transverse assembly (1).

8. A horizontal flow-pack packaging machine comprising a transverse welding and cutting assembly (1) according to any of the preceding claims.
